# EUROPÄISCHE PATENTSCHRIFT

(11) **EP 0 583 632 B1**
(45) Veröffentlichungstag und Bekanntmachung des Hinweises auf die Patenterteilung: **29.01.1997**
(21) Anmeldenummer: 93111571.1
(22) Anmeldetag: 20.07.1993
(51) Int. Cl.: H01P 3/00, H01G 4/228

(54) **Interdigitalkondensator und Verfahren zu dessen Herstellung**
Interdigital capacitor and method of production thereof
Condensateur interdigital et méthode pour sa fabrication

(30) Priorität: 07.08.1992 DE 4226155
(43) Veröffentlichungstag der Anmeldung: 23.02.1994
(73) Patentinhaber: Daimler-Benz Aktiengesellschaft, 70546 Stuttgart (DE)
(72) Erfinder: Kosslowski, Stefan, Dr., D-89231 Neu-Ulm (DE); Koster, Norbert H. L., Dr., D-52457 Aldenhoven (DE); Bertenburg, Ralf M., Dr., D-47798 Krefeld (DE); Wolff, Ingo, Prof. Dr., D-5100 Aachen (DE)
(74) Vertreter: Weber, Gerhard, Dipl.-Phys.

(56) Entgegenhaltungen:
- 19TH EUROPEAN MICROWAVE CONFERENCE- PROCEEDINGS;4-7 September 1989,London,GB MICROWAVE EXHIBITIONS AND PUBLISHERS LTD, Tunbridge Wells,GB,1989
- PATENT ABSTRACTS OF JAPAN vol. 10, no. 65 (E-388)(2122) 14. März 1986 & JP-A-60 216 601 (MURATA SEISAKUSHO K.K.) 30. Oktober 1985
- 20TH EUROPEAN MICROWAVE CONFERENCE- PROCEEDINGS;10-13 September 1990,Budapest; MICROWAVE EXHIBITIONS AND PUBLISHERS LTD, Tunbridge Wells,GB,1990
- IEEE TRANSACTIONS ON MICROWAVE THEORY AND TECHNIQUES Bd. 38, Nr. 12 , Dezember 1990 , NEW YORK US Seiten 1808 - 1815 M. NAGHED ET AL. 'Equivalent capacitances of coplanar waveguide discontinuities and interdigitated capacitors using a three-dimensional finite difference method'
- IEEE TRANSACTIONS ON MICROWAVE THEORY AND TECHNIQUES Bd. 31, Nr. 7 , Juli 1983 , NEW YORK US Seiten 558 - 566 D.F. WILLIAMS ET AL. 'Design and performance of coplanar waveguide bandpass filters'
- 19TH EUROPEAN MICROWAVE CONFERENCE- PROCEEDINGS;4-7 September 1989,London,GB MICROWAVE EXHIBITIONS AND PUBLISHERS LTD, Tunbridge Wells,GB,1989
- 19TH EUROPEAN MICROWAVE CONFERENCE- PROCEEDINGS;4-7 September 1989,London,GB MICROWAVE EXHIBITIONS AND PUBLISHERS LTD, Tunbridge Wells,GB,1989 G.KIBUUKA et al.:"Coplanar lumped elements and their application in filters on ceramic and gallium arsenide substrates"
- 20TH EUROPEAN MICROWAVE CONFERENCE- PROCEEDINGS;10-13 September 1990,Budapest; MICROWAVE EXHIBITIONS AND PUBLISHERS LTD, Tunbridge Wells,GB,1990 M.NAGHED et al.:"Multiple coupled asymmetrical coplanar waveguides and their apllication in interdigitated filters" Seiten 913-918
- 19TH EUROPEAN MICROWAVE CONFERENCE- PROCEEDINGS;4-7 September 1989,London,GB MICROWAVE EXHIBITIONS AND PUBLISHERS LTD, Tunbridge Wells,GB,1989 N.H.L. KOSTER et al.:"Investigations on air bridges used for MMICs in CPW technique" Seiten 666-671

## Beschreibung

Die Erfindung betrifft einen Interdigitalkondensator und ein Verfahren zu dessen Herstellung nach dem Oberbegriff der Patentansprüche 1 und 5.

Derartige Kondensatoren finden Anwendung in monolithisch integrierten Mikrowellenschaltungen (MMIC) als Abblockkondensatoren oder als abstrahlungsarme Kondensatoren in Filterstrukturen und Resonanzkreisen.

Interdigitalkondensatoren sind bekannte passive Bauelemente für MMIC (siehe u.a. J. Frey "Microwave Integrated Circuits", S. 351, Artech House, INC. 1975).

Um kapazitiv belastete koplanare Leitungen für MMIC's zu erhalten mit denen eine Entkopplung von Höchstfrequenz- und Gleichspannungsnetzwerken möglich ist, ist es üblich, MIM (Metal-Insulator-Metal)-Kondensatoren zu verwenden (siehe beispielsweise Goyal "Monolithic Integrated Circuit Design", Artech House 1989). Die Zuführung von Versorgungsströmen für die aktiven Bauelemente der MMIC's erfolgt in einer derartigen Realisierung über eine separate hochohmige Stichleitung mit galvanisch verstärktem Mittelleiter. Zur Realisierung des Dielektrikums des MIM-Kondensators sind zusätzliche Prozeßschritte im Herstellungsprozeß der MMIC's notwendig. Außerdem gibt es Probleme hinsichtlich der Spannungsfestigkeit des Dielektrikums. Weiterhin muß zur Vermeidung von unerwünschten Kopplungen bei Verwendung von MIM-Kondensatoren ein relativ großer Abstand zwischen den Metallflächen des Kondensators und den kritischen Leiterbahnstrukturen bestehen. Dies wirkt sich nachteilig auf die Packungsdichte und somit auf die Herstellungskosten der MMIC's aus.

Der Erfindung liegt deshalb die Aufgabe zugrunde, einen Kondensator für einen koplanaren Wellenleiter für MMIC's und dessen Herstellungsverfahren anzugeben, der für einen Frequenzbereich über 30 GHz geeignet ist, eine hohe Spannungsfestigkeit besitzt und technisch einfach und kostengünstig herstellbar ist.

Die Aufgabe wird gelöst durch die im kennzeichnenden Teil der Patentansprüche 1 und 5 angegebenen Merkmale. Vorteilhafte Ausgestaltungen und/oder Weiterbildungen sind den Unteransprüchen zu entnehmen.

Die Erfindung wird anhand eines Ausführungsbeispiels näher erläutert unter Bezugnahme auf eine schematische Zeichnung.

Mit dem erfindungsgemäßen interdigitalen Taschenkondensator (covered interdigital capacitor, CIC) wird die Kapazität der koplanaren Leitung in vorteilhafter Weise gegen Masse erhöht, indem die Finger der Stichleitung mit einer Luftbrückentasche überdeckt werden.

Die Luftbrückentasche hat weiterhin den Vorteil, daß die Kondensatorstruktur gegenüber anderen Schaltungselementen abgeschirmt wird.

Außerdem ist von Vorteil, daß der Mittelleiter der koplanaren Leitungsstruktur galvanisch verstärkt wird, so daß der erforderliche Stromtransport zur Arbeitspunkteinstellung der aktiven Bauelemente problemlos über den Mittelleiter erfolgen kann.

In Fig. 1 ist ein Ausführungsbeispiel für einen interdigitalen Taschenkondensator dargestellt.

Fig. 2 zeigt eine integrierte Mikrowellenschaltung in der z.B. drei interdigitale Taschenkondensatoren verwendet werden.

Der Aufbau des erfindungsgemäßen Taschenkondensators entspricht im Prinzip dem eines konventionellen interdigitalen Kondensators, dessen Finger abwechselnd mit dem Mittelleiter des koplanaren Wellenleiters und den als Masseflächen wirksamen Außenleitern verbunden sind. Erfindungsgemäß werden nun jedoch in dem gleichen Technologieschritt, in dem auch die für Koplanarschaltungen erforderlichen Luftbrücken hergestellt werden, die Finger mit einer Luftbrückentasche überdeckt.

Die Luftbrückentasche ist zum Mittelleiter hin offen, die anderen Seiten sind geschlossen. Im folgenden wird ein Ausführungsbeispiel eines interdigitalen Taschenkondensators angegeben.

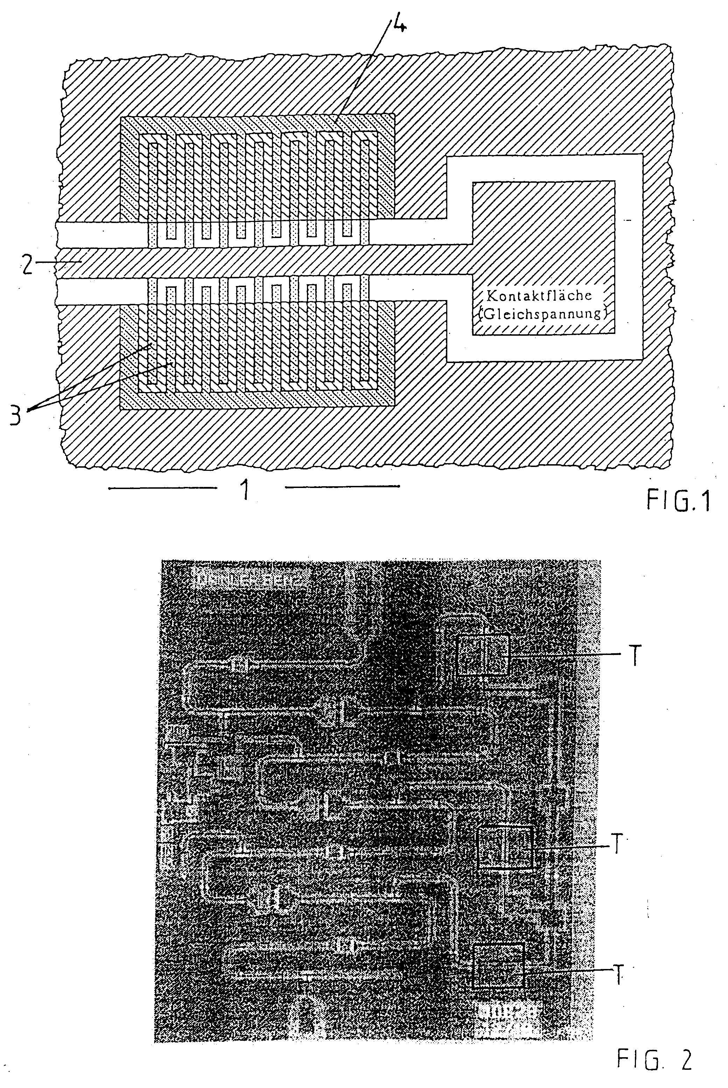

Auf einem GaAs-Substrat ist eine Leiterstruktur für einen interdigitalen Kondensator 1 aufgebracht mit einem Mittelleiter 2 und z.B. 50 Fingern 3 (FIG. 1). Bei der Leiterstruktur handelt es sich zunächst um eine aufgedampfte Gold-Schicht mit Chrom als Haftvermittler. Dabei beträgt die Fingerbreite z.B. w_{F} = 2µm, die Fingerlänge z.B. l_{F} = 70µm, die Schlitzbreite der Finger z.B. s_{F} = 2µm, die Mittelleiterbreite z.B. w_{CPW} = 15µm und die Schlitzbreite des koplanaren Wellenleiters z.B. s_{CPW} = 10µm. Die Metallisierungshöhe der Finger beträgt z.B. t_{F} = 0,3µm.

Zur Herstellung der Luftbrückentasche werden die Finger 3 mit ca. 3µm dickem Fotolack bedeckt. Die gesamte Untermetallisierung der Leiterstruktur und die Fotolackschicht werden nun mit z.B. Gold verstärkt. Die galvanische Verstärkung beträgt etwa 3µm. Anschließend wird der Fotolack entfernt und es entsteht über der Fingerstruktur eine Luftbrückentasche mit einer Luftbrückenhöhe von etwa 3µm. Der galvanisch verstärkte Mittelleiter besitzt eine Dicke von ebenfalls 3µm.

Derartige Taschenkondensatoren sind beipielsweise in einer integrierte Mikrowellenschaltung gemäß Fig. 2 einsetzbar. In der dort angegebenen Schaltung, die in koplanarer Wellenleitertechnik hergestellt wurde, sind z.B. drei interdigitale Taschenkondensatoren T enthalten.

Die Erfindung ist nicht auf die im Ausführungsbeispiel angegebenen Materialien beschränkt, sondern kann auf Schaltungen in beispielsweise Si- oder InP-Technologie übertragen werden. Auch die Dimensionierung des interdigitalen Kondensators kann je nach gewünschter Funktion unterschiedlich gewählt werden.

Bei Anwendungen, in denen eine Kapazitätserhöhung und nicht die Spannungsfestigkeit im Vordergrund steht, ist es vorteilhaft die Luftbrückentasche zusätzlich mit einem Dielektrikum auszufüllen, beispielsweise mit Si₃N₄.

## Patentansprüche

1. Interdigitalkondensator, dessen Finger abwechselnd mit dem Mittelleiter eines koplanaren Wellenleiters und den als Masseflächen wirksamen Außenleitern verbunden sind, dadurch gekennzeichnet, daß die Finger mit einer Luftbrückentasche bedeckt sind, die durch Abscheiden einer Metallschicht über der Leiterstruktur gebildet wird, und daß die Luftbrückentasche lediglich zum Mittelleiter hin geöffnet ist.

2. Interdigitalkondensator nach Anspruch 1, dadurch gekennzeichnet, daß die Luftbrückentasche eine Höhe von 3µm besitzt.

3. Interdigitalkondensator nach Anspruch 1, dadurch gekennzeichnet, daß die Finger eine Metallschichtdicke von 0,3µm besitzen.

4. Interdigitalkondensator nach Anspruch 1, dadurch gekennzeichnet, daß der Mittelleiter aus einer galvanisch verstärkten Metallschicht mit einer Schichtdicke von 3µm besteht.

5. Verfahren zur Herstellung eines Interdigitalkondensators nach den vorhergehenden Ansprüchen, dadurch gekennzeichnet,
- daß auf die Fingerstruktur eine Fotolackschicht aufgebracht wird,
- daß auf die Fotolackschicht und die Leiterbahnstruktur der Koplanarleitung eine Metallschicht galvanisch abgeschieden wird, und
- daß anschließend die Fotolackschicht entfernt wird und dadurch eine Luftbrückentasche über der Fingerstruktur ausgebildet wird.

6. Verfahren nach Anspruch 5, dadurch gekennzeichnet, daß die Luftbrückentasche gleichzeitig mit den für eine Koplanarschaltung erforderlichen Luftbrücken hergestellt wird.

## Claims

1. Interdigital capacitor, the fingers of which are alternately connected with the centre conductor of a coplanar waveguide and with the outer conductors, which are effective as ground areas, characterised thereby that the fingers are covered by an air bridge pocket which is formed by deposition of a metal layer over the conductor structure and that the air bridge pocket is open merely towards the centre conductor.

2. Interdigital capacitor according to claim 1, characterised thereby that the air bridge pocket has a height of 3 microns.

3. Interdigital capacitor according to claim 1, characterised thereby that the fingers have a metal layer thickness of 0.3 microns.

4. Interdigital capacitor according to claim 1, characterised thereby that the centre conductor consists of a metal layer reinforced by plating and having a layer thickness of 3 microns.

5. Method of manufacturing an interdigital capacitor according to the preceding claims, characterised thereby
- that a photographic lacquer layer is applied to the finger structure,
- that a metal layer is deposited by plating on the photographic lacquer layer and the conductor path structure of the coplanar guide, and
- that subsequently the photographic lacquer layer is removed and an air bridge pocket is thereby formed over the finger structure.

6. Method according to claim 6, characterised thereby that the air bridge pocket is produced simultaneously with the air bridges required for a coplanar connection.

## Revendications

1. Condensateur interdigité dont les doigts sont reliés alternativement au conducteur central d'un guide d'onde coplanaire et aux conducteurs extérieurs, agissant comme des surfaces à la masse, caractérisé en ce que les doigts sont couverts d'une poche à pont d'air formée par dépôt d'une couche métallique par-dessus la structure de conducteurs et que la poche à pont d'air est uniquement ouverte vers le conducteur central.

2. Condensateur interdigité selon la revendication 1, caractérisé en ce que la poche à pont d'air possède une hauteur de 3 µm.

3. Condensateur interdigité selon la revendication 1, caractérisé en ce que les doigts possèdent une couche métallique d'une épaisseur de 0,3 µm.

4. Condensateur interdigité selon la revendication 1, caractérisé en ce que le conducteur central est formé d'une couche métallique renforcée galvaniquement et ayant une épaisseur de couche de 3 µm.

5. Procédé pour fabriquer un condensateur interdigité selon les revendications précédentes, caractérisé en ce que
- on applique une couche de résine photosensible sur la structure de doigts,
- on dépose galvaniquement une couche métallique sur la couche de résine photosensible et la structure de pistes conductives de la ligne coplanaire et
- on enlève ensuite la couche de résine photosensible en formant ainsi une poche à pont d'air par-dessus la structure de doigts.

6. Procédé selon la revendication 5, caractérisé en ce que l'on réalise la poche à pont d'air en même temps que les ponts d'air nécessaires pour un circuit coplanaire.
